# EUROPEAN PATENT SPECIFICATION

(11) **EP 0 337 778 B1**
(45) Date of publication and mention of the grant of the patent: **13.03.1996**
(21) Application number: 89303656.6
(22) Date of filing: 13.04.1989
(51) Int. Cl.: G01F 13/00, G01F 11/26

(54) **Fluid container with dosage assembly**
Flüssigkeitsbehälter mit Dosiereinrichtung
Réservoir de fluide avec assemblage de dosage

(30) Priority: 13.04.1988 DK 2030/88; 31.03.1989 DK 1582/89
(43) Date of publication of application: 18.10.1989
(73) Proprietor: Colgate-Palmolive Company, New York, N.Y. 10022-7499 (US)
(72) Inventor: Vesborg, Steen, Brussels (BE)
(74) Representative: Kearney, Kevin David Nicholas

(56) References cited:
- EP-A- 0 208 941
- EP-A- 0 274 256
- US-A- 3 146 923
- US-A- 4 407 435

## Description

The present invention relates to a fluid container with a dosage assembly for delivering a metered amount of fluid through an outlet opening when the container is turned through 180°. A plunger moves during the metering of the dosage between a start position, providing a free passage for the fluid between the outlet opening and the fluid in the container, and a blocking position where the plunger blocks this passage and thus the outflow of fluid. A timer chamber defined by the plunger and having a timer aperture controls the movement of the plunger from its start position to its blocking position by means of the flow of fluid.

US 4,407,435 discloses a dosage assembly installed sealing in the opening of a container, the assembly including a tubular conduit for fluid extending into the container. The upper end of the conduit is provided with an outlet opening and the lower end with a smaller timer aperture. In the wall of the conduit between the outlet opening and the timer aperture there are inlet opening for the fluid. A cylinder-shaped plunger is movably and sealingly mounted in the conduit.

When the container is in a vertical position, the plunger is adjacent the lower end of the conduit in its start position. When the container is turned through 180°, fluid flows into the conduit through the inlet openings and out through the outlet. Simultaneously the plunger moves down towards these inlet openings, controlled by the flow of fluid, through the timer aperture and into the timer chamber below the plunger. Finally, during its movement the plunger blocks the inlet openings to the conduit and thus the passage of fluid between the outlet opening and the interior of the container resulting in no more fluid being delivered.

When the container is returned to its vertical position the plunger moves slowly down towards its start position at the bottom of the conduit while the fluid in the timer chamber flows out through the comparatively small timer aperture.

In order to increase the velocity of the return of the plunger to its start position it is suggested to provide a countervalve in the inside of the plunger. The valve opening when the bottle is turned back through 180° after the dosing process so that the fluid flows out through the plunger during its return movement. This solution is not satisfactory, since a countervalve inside the plunger renders the dosage assembly considerably more expensive. Another reason is that there is still a small amount of fluid in the conduit after the plunger has returned to its start position so that during a tilting of the container directly upon the return of the plunger, the amount of fluid delivered is not exactly the same as the amount delivered when the container has been left standing for some time subsequent to a delivery of fluid.

USP 3146923 discloses a dispenser arrangement in which a dash pot primed with the liquid being dispensed is used to control movement of a flange past outlet apertures when the container is inverted. The dash pot is kept permanently charged with liquid. If the liquid contains suspended solids these can settle out in the dash pot interfering with its operation. In addition immediate resetting of the dash pot for repeated discharges is not possible.

EP-0208941 describes a dosage assembly in which a cylindrical stopper mounted in the neck of a vessel has a conical plunger float mounted therein, feed openings in its cylindrical sides and a further opening at its base.

It is an object of the present invention to provide a container with a dosage assembly of the type described above which is of simple design and inexpensive to manufacture but nevertheless exact and reliable. Particularly during dosing processes following closely upon each other.

According to the invention, there is provided a dosage-metering assembly for a fluid container, which has a neck with an opening through which fluid is dispensed when the container is inverted, comprising a stopper member which is mounted on the neck of the container preferably in alignment with a central axis of the neck opening for the dispensing of fluid and which has an outlet portion preferably concentric with the central axis provided with an outlet opening for the outflow of fluid from the container, a timer chamber formed with an annular wall preferably concentric with the central axis and preferably extending into the neck of the container, and a plunger formed separately from the stopper, the plunger being movable with respect to the annular wall of the timer chamber under gravity preferably along the central axis from a start position to an end position when the container is inverted, a feed opening into the timer chamber being included providing fluid communication between the timer chamber and the container whereby fluid feeds into the timer chamber characterised in that the plunger has a timer flange or wall which affords a wall of the timer chamber and which extends radially with regard to the annular wall of the timer chamber and is in slidable sealing relationship therewith so as to sweep through a predetermined volume defined from the start position to the end position of the plunger, the said volume constituting the timer chamber which is in fluid communication at one end with the passageway of the stopper member via a restricted timer aperture the said passageway being connected to the outlet opening, and in that the feed opening at another end of the timer chamber feeds fluid from the container to the timer chamber when the container is inverted, and in that another opening (25, 110, 325 and 406', 420) formed in the stopper wall or between the stopper wall and the timer flange or wall also feeds fluid into the passageway of the stopper member and thus to the outlet opening when the container is inverted, the feed opening being cut off by the timer flange or wall of the plunger when it moves past the feed opening a predetermined time after the container is inverted, the timer flange thereby cutting off further flow of fluid from the feed opening into the timer chamber after the predetermined time from the start position, the timer chamber being emptied of fluid by the plunger, whereupon the flow of fluid from the passageway to the outlet opening is cut off by the plunger.

In this assembly the aperture of the timer chamber being connected with a passageway between the outlet opening and the interior of the container, and the timer chamber having a feed opening connected with the interior of the container when the plunger is in its start position.

As a result the timer chamber is substantially momentarily filled with fluid through the feed opening, when the container is turned through 180° and gradually emptied during the movement of the plunger towards its blocking position so that the timer chamber is substantially empty when the plunger has reached its blocking position and the dosing process is finished. This causes the plunger to drop quickly to its start position when the container is returned to its vertical position, as no fluid has to be displaced from the timer chamber. This enables a fast repetition of exact fluid dosages.

Preferred features and embodiments of the container with dosage assembly of the present invention are described in the subsidiary claims.

The invention may be carried into practice in various ways and some embodiments will now be described by way of example with reference to the accompanying drawings, in which:-
FIGURE 1 is a vertical section through a first embodiment of a container with dosage assembly in accordance with the invention in the opening of the container;
FIGURE 2 is a view similar to FIGURE 1 of a second embodiment of the invention;
FIGURE 3 is a modified form of the embodiment shown in FIGURE 2; and
Figures 4 and 5 are views similar to FIGURE 1 of third and fourth embodiments respectively.

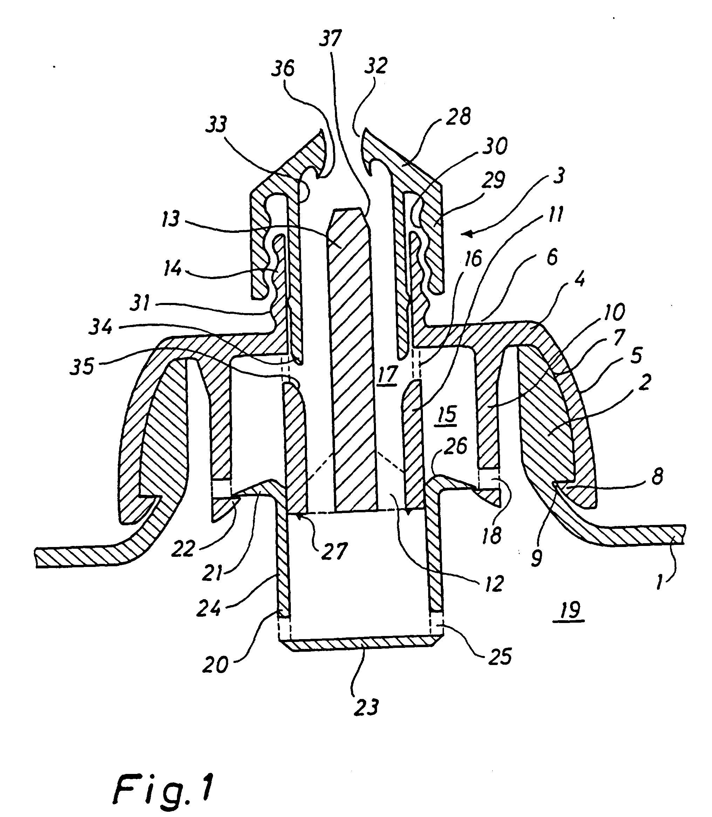

FIGURE 1 shows a container 1 with a neck 2 carrying a dosage assembly 3. The dosage assembly 3 comprises a stopper 4 with skirt 5 which extends downwards from an upper terminal wall 6 and which is complementary to the outer surface 7 of the neck 2, ending in a circular projection 8 in snapping engagement with a corresponding circular recess 9 in the neck 2. Radially within the skirt 5, an outer cylindrical wall 10 extends axially into the opening of the neck 2. Radially inside the outer cylindrical wall 10 an inner cylindrical wall 11 extends from the upper terminal wall 6 into the opening of the neck 2. The two cylindrical walls 10 and 11 are of substantially the same length. The inner end of the wall 11 is connected to a rod-shaped cylindrical body 13 through a number of webs 12, the body 13 extending away from the interior 19 of the container, centrally to within a third cylindrical wall 14. The wall 14 extends outwards from the upper terminal wall 6 and is substantially a prolongation of the inner cylindrical wall 11.

Together, the outer cylindrical wall 10 and the inner cylindrical wall 11 define and annular timer chamber 15. A number of timer apertures 16 are formed in the inner cylindrical wall 11, by means of which the upper end of the timer chamber is connected with a passageway 17 between the rod-shaped body 13 and the inner cylindrical wall 11 and the third cylindrical wall 14 respectively. At its lower end, the timer chamber 15 is connected with the interior 19 of the container via a number of feed openings 18.

A cup-shaped plunger 20 with an outwardly extending flange 21 is movably mounted with respect to the stopper 4, with the flange 21 sealingly engaged with the outer cylindrical wall 10, and the inner cylindrical wall 11. A radially inwardly extending projection 22 at the lower end of the outer cylindrical wall 10 prevents the flange 21 of the plunger 20 from escaping from the timer chamber 15. Adjacent the bottom 23 of the cup-shaped plunger 20 there are a number of inlet openings 25 in the cylindrical skirt 24 for the fluid. The side of the flange facing the timer chamber 15 is provided with a circular sealing bead 26. When the plunger is in its start position (as shown) the distance of the bead 26 from the inner surface of the upper terminal wall of the stopper is substantially equal to the distance between the inner surface of the bottom 23 of the plunger 20 and a sealing bead 27 on the terminal surface of the inner cylindrical wall 11.

A cap 28 with an outer skirt 29 having an inner thread 30 is screwed onto a corresponding outer thread 31 on the third cylindrical wall 14 of the stopper 4. The cap 28 has a central outlet opening 32 and an inner skirt 33 which extends into the passageway 17 parallel with the outer skirt 29 and which sealingly engages the inside of the third cylindrical wall 14.

By screwing the cap 28 down, the lower end of the inner skirt 33 blocks a constantly increasing part of timer apertures 16 between the timer chamber 15 and the passageway 17. When the cap is completely screwed down it blocks the apertures 16 completely, as a lower bevelled surface 34 on the surface 35 at the bottom of the inner cylindrical wall 11. Simultaneously a sealing lip 36 adjacent the outlet 32 of the cap 28 sealingly abuts a bevel 37 at the upper end of the rod-shaped body 13, thus preventing any outflow through the dosage assembly 3.

When the container with dosage assembly is tilted or turned through 180°, the timer chamber 15 is substantially momentarily filled with the fluid in the container, the fluid flowing in through the feed openings 18. When the timer chamber 15 is substantially filled, fluid flows in through the inlet openings 25 in the plunger 23 and from there through the passageway 17 and out through the outlet opening 32. Simultaneously the plunger begins to move upwards as shown in FIGURE 1, i.e. downwards when the container is turned through 180°, due to the prevailing pressure, and the fluid in the timer chamber 15 flows out through the timer apertures 16 and into the passageway 17, simultaneous flow of fluid into the timer chamber 15 being prevented when the flange 21 of the plunger 20 has passed the feed openings 18. The direct outflow of fluid through the inlet openings 25 to the passageway 17 and out through the outlet opening 32, in addition to the flow of fluid from the timer chamber 15 to the passageway 17 continues until the sealing bead 26 on the flange 21 of the plunger 20 abuts the inside of the terminal wall 6. Simultaneously the inside of the bottom 23 of the plunger 20 abuts the sealing bead 27 on the inner cylindrical wall 11, resulting in the plunger 20 blocking the flow of fluid through the dosage assembly. After the dosing process has been completed and the container is returned to its vertical position, the plunger immediately drops back to its start position and a new dosing process can be started.

The amount of fluid delivered during the dosing process can be regulated by turning the cap 28 to alter the effective size of the timer aperture 16. At the same time the length of time necessary to empty the timer chamber 15 is also altered.

When the container 1 is rigid the dosage assembly 3 is provided with a venting duct in a manner known per se, the duct terminating further down in the container than the inlet openings 25. When an elastic, squeezable container is used such a venting duct is, of course, unnecessary. Regardless of whether a rigid or an elastic, squeezable container is used, the amount of fluid delivered is constant and independent of the pressure the container is subjected to. Furthermore the amount of fluid delivered is substantially independent of the viscosity of the fluid.

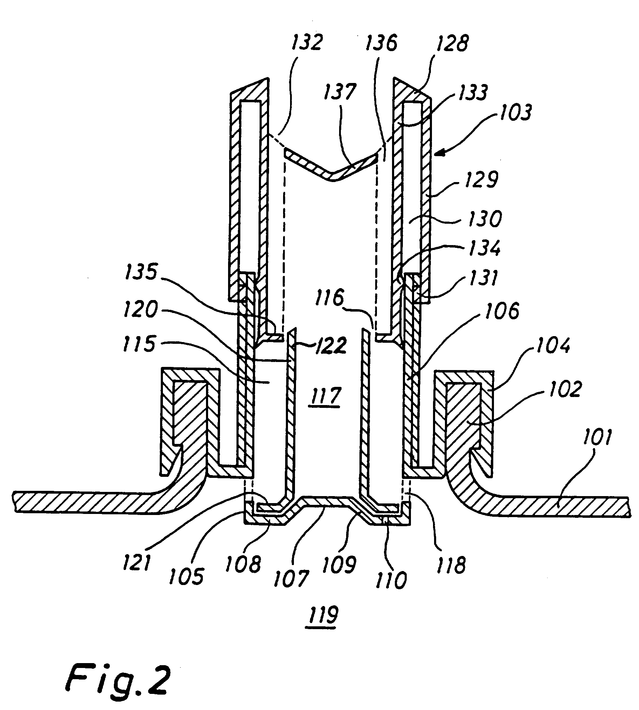

FIGURE 2 shows a second embodiment of a dosage assembly 103 in a container 101. The dosage assembly 103 comprises a stopper 104 in tight sealing engagement with the neck 102 of the container. The stopper 104 includes a cup-shaped part 105 and a skirt 106. The skirt 106 is coaxial with respect to the opening in the neck 102 of the container 101. The cup-shaped part 105 includes a bottom 107 in the interior 119 of the container 101, the bottom 107 having a planar, annular part 108 and a frustoconical part 109 facing away from the interior 119 of the container. Adjacent the bottom the skirt 106 has a number of feed openings 118 and the planar, annular part 108 of the bottom 107 is provided with a number of capillary holes 110. The cup-shaped part 105 has a tubular plunger 120 with an outward flange 121 adjacent the interior 119 of the container, the flange having an outer diameter substantially corresponding to the inside diameter of the cup-shaped part 105.

A cap 128 is provided on the skirt 106 of the stopper 104, the cap having an outer cylindrical skirt 129 and an inner cylindrical skirt 133, which together define a cylindrical groove 130 to receive the skirt 106 of the stopper 104. The outer skirt 129 of the cap 128 has a radially inwardly extending projection 131 provided with an inner thread which engages a corresponding outer thread on the skirt 106 of the stopper 104. The inner skirt 133 is provided with a radially outwardly extending circular bead 134 sealingly abutting the inside surface of the skirt 106 of the stopper 104.

At its lower end the inside skirt of the cap 128 has a radially inwardly extending flange 135, the inner diameter of which is slightly smaller than the outer diameter of a tubular part 122 of the plunger 120. This results in a timer aperture 116 between the tubular part 122 and the flange 135, the timer aperture being part of a timer chamber 115 defined by the plunger 120, the flange 135 of the cap 128 and the skirt 106 of the stopper 104.

A number of ribs 136 extend radially inwardly from the inner cylindrical skirt 133 of the cap 128. These ribs guide the tubular part 122 of the plunger 120 as it moves axially. The upper ends of the radial ribs 136 are provided with a central deflector plate 137 forming an annular outlet opening 132 together with the inner skirt 133.

When the container 101 with the dosage assembly 103 is tilted or turned through 180°, the timer chamber 115 is substantially momentarily filled with fluid flowing through the feed openings 118. When the capillarity of the capillary holes 110 ends and the timer chamber 115 is filled, the plunger 120 begins to move forwards and the fluid begins to flow into the passageway 117 via the feed openings 118. When the plunger 120 has travelled a predetermined distance the feed openings no longer communicate with the timer chamber 115, but with the inside of the plunger 120. From the passageway 117 the fluid flows out through the outlet opening 132. During forward movement of the plunger 120 caused by the prevailing pressure, fluid also continues to flow out of the timer through the timer aperture 116.

Eventually the plunger 120 reaches its final position, where the flange 121 sealingly abuts the inwardly extending flange 135 of the cap 128 and the upper terminal surface of plunger 120 sealingly abuts the central deflector plate 137. Thus the flow of fluid through the dosage assembly 103 is completely blocked. When the container 101 is returned to its vertical position after the dosing process has been completed, the plunger 120 drops immediately back to the start position shown in FIGURE 2 due to the influence of gravity.

The amount of fluid delivered during the dosage process is adjusted by means of displacing the cap 128 with respect to the stopper 104 thus changing the length of travel of the plunger 120 from its start position to its final position.

When the cap is completely screwed down the passage of fluid through the dosage assembly is completely blocked by the plate 137.

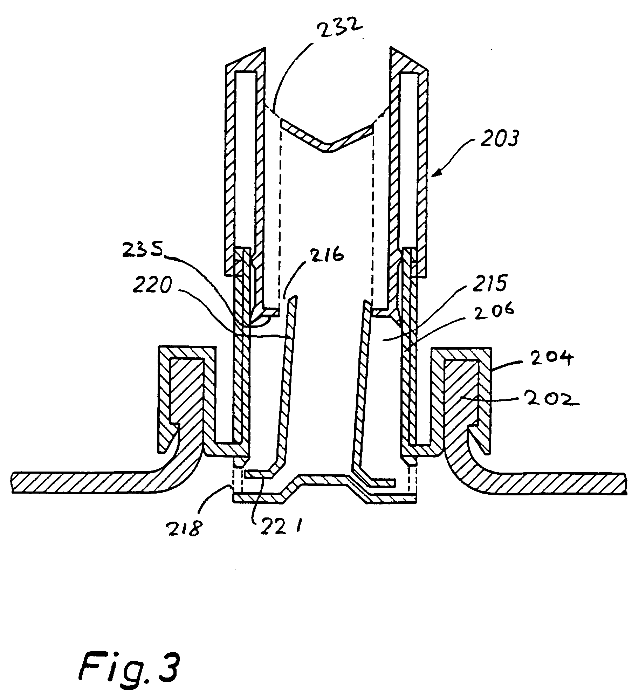

FIGURE 3 shows a modified form of the dosage assembly of FIGURE 2. The main difference compared to the design shown in FIGURE 2 is that the plunger is not retained in its start position by means of capillarity during the filling of the timer chamber. Instead, the plunger 220 tilts at the moment the timer chamber 215 is filled.

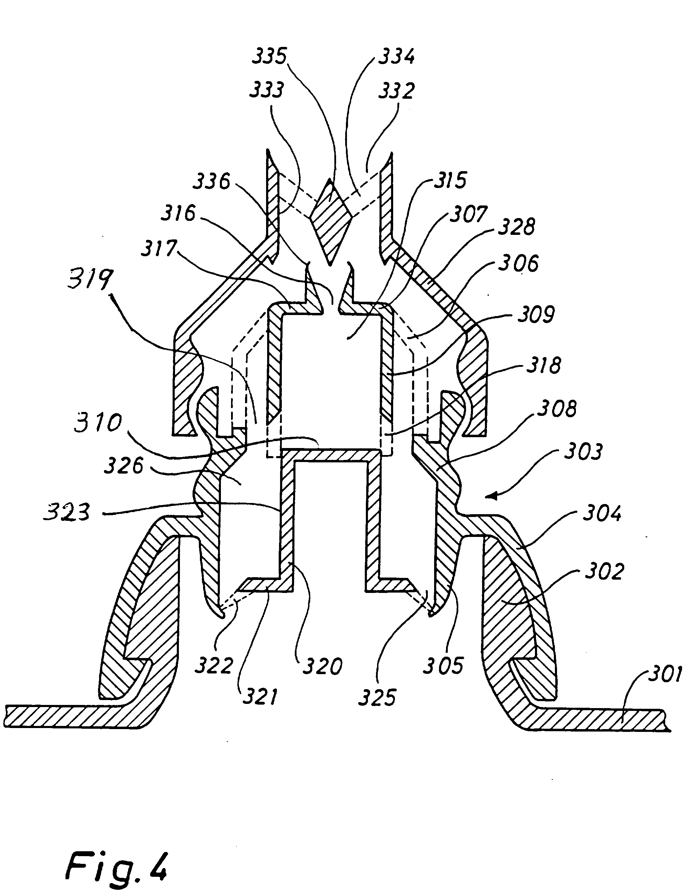

FIGURE 4 illustrates a third embodiment of a dosage assembly 303 on a container 301, comprising a stopper 304 sealingly joined to the neck 302 of the container, and a lower cylindrical part 305 connected to an upper cup-shaped part 307 by means of a conical part 308 and a number of ribs 306. The open end of the cup-shaped part 307 faces down towards the bottom of the cylindrical part 305 and forms a timer chamber 315. The timer chamber 315 is provided with a central timer aperture 316 in a lower wall 317 and a number of feed openings 318 at the free end of a cylindrical wall 309. A cup-shaped plunger 320 is sealingly and movably mounted in the cup-shaped part 307, with the open end of the plunger 320 facing the same direction as the open end of the cup-shaped part 307. The plunger 320 has a radially outwardly extending flange 321 terminating in a number of control fingers 322 for control and support by the inner surface of the cylindrical part 305.

A substantially cup-shaped cap 328 is in threaded engagement with the stopper 304 surrounding the upper, cup-shaped part 307 and the ribs 306 of the stopper, to form a passageway 319 around the cup-shaped part 307. The upper end of the cap 328 is provided with an outlet 332 defined by an upper outlet passageway 333 and a torpedo-shaped body 335 connected to the passageway by means of ribs 334. The torpedo-shaped body 335 sealingly abuts a circular lip 336 around the timer aperture 316 by means of screwing the cap 328 down for altering the effective size of the timer aperture.

When the container is tilted or turned through 180°, fluid flows out into the timer chamber 315 via inlet openings 325 between the control fingers 322 of the plunger 320, a circular chamber 326 surrounding the plunger, and the feed openings 318. Simultaneously fluid flows from the chamber 326 into the passageway 319 and towards the outlet opening 332.

The plunger 320 moves forward owing to the prevailing pressure and displaces fluid from the timer chamber 315, and after a relatively short travel the wall 310 and the cylindrical side walls of the plunger 320 slide past the openings 318 and close them off. At the same time, fluid flows through the circular chamber 326 and the passageway 319 directly out through the outlet opening 332 and this continues until the flange 321 of the plunger 320 eventually abuts the conical part 308, thus preventing further fluid flow through the dosage assembly. In the final position the end of the plunger 320 substantially abuts the lower wall 317 of the cup-shaped part 307 so that the timer chamber 315 is substantially empty.

Due to gravity, the plunger 320 immediately drops back to the position of FIGURE 4 and is ready for a new dosing process, when the container 301 and dosage assembly 303 is returned to its vertical position.

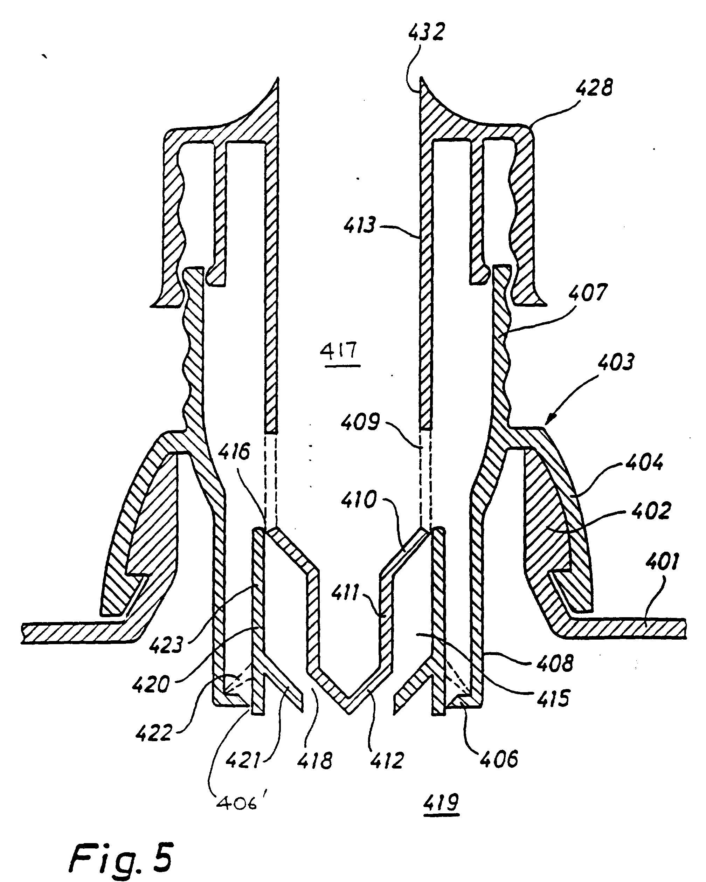

FIGURE 5 illustrates a fourth embodiment of a container 401 with dosage assembly 403 comprising a stopper 404 in tight sealing engagement with the neck 402 of the container 401. The stopper 404 has a cylindrical part 408, which faces the interior 419 of the container and terminates in an inwardly extending flange 406, and an outwardly extending thread 407, the latter being in sealing, threaded engagement with a cap 428. The cap 428 has an upper cylindrical part 413 extending towards the interior 419 of the container, the upper end of which forms an outlet opening 432 and the lower end of which is provided with a number of radially extending throughflow openings 409. At its lower end, below the openings 409, the upper cylindrical part 413 changes into a smaller, lower cylindrical part 411 via a conical part 410, with the lower part 41 terminating in a cone-shaped part 412.

A cylindrical plunger 420 having an internal lower conical flange 421 corresponding in shape to the conical part 410 and radially outwardly extending control fingers 422 is located in the vicinity of the lower cylindrical part 411 of the cap 428 to form a timer chamber 415. The cylindrical part of the plunger 420 has an inner diameter substantially corresponding to the outer diameter of the upper cylindrical part 413 of the cap 428. The flange 421 has an inner diameter substantially corresponding to the outer diameter of the lower cylindrical part 411 of the cap 428.

In the start position of the plunger, as shown in FIGURE 5, a feed opening 418 is provided between the conical flange 421 of the plunger 420 and the cone-shaped part 412 of the cap 428. Timer apertures 416 (not shown) are provided between the throughflow openings 409, extending a short distance downwards on the conical part 410 of the cap 428, and the cylindrical part 423 of the plunger 420, extending a short distance upwards on the upper cylindrical part 413 of the cap 428.

When the container is tilted or turned through 180°, the timer chamber is substantially momentarily filled with fluid. The plunger 420 moves outwards and simultaneously, the timer chamber 415 empties. The fluid flows around the plunger 420, through the throughflow openings 409 and forward through the passageway 417 to the outlet opening 432. When the timer chamber is emptied, the plunger 420 reaches a final position where its flange 421 sealingly abuts the conical part 410. At the same time the upper end of the cylindrical part 423 sealingly abuts the upper cylindrical part 413 of the cap 428 directly above the throughflow openings 409. Thus the flow of fluid through the dosage assembly is blocked.

The amount of fluid delivered is adjusted by means of turning the cap 428 with respect to the stopper 404 thus altering the travel of the plunger 420 from its start position to its final position, simultaneously changing the effective size of the throughflow openings 409.

All parts of the dosage assembly are manufactured from injection moulded plastics material. The cap can, for example, be made from polyethylene (LD), the stopper from polypropylene and the plunger from a thermosetting plastics material, such as urea formaldehyde or melanine or optionally from a filled thermoplast, such as BaSO₄-filled polyethylene.

The invention can be varied in many ways without thus deviating from the scope of the invention. The cap can, for example, be non-adjustably connected with the stopper and optionally be an integral part thereof.

## Claims

1. A dosage-metering assembly (3, 103, 203, 303, 403) for a fluid container, which has a neck (2, 102, 202, 302, 402) with an opening through which fluid is dispensed when the container is inverted, comprising a stopper member (4, 104, 204, 304, 404) which is mounted on the neck of the container and which has an outlet portion provided with an outlet opening (32, 132, 232, 332, 432) for the outflow of fluid from the container, a timer chamber (15, 115, 215, 315, 415) formed with an annular wall (10, 106, 206, 309, 411) and a plunger (20, 120, 220, 320, 420) formed separately from the stopper, the plunger being movable with respect to the annular wall of the timer chamber under gravity from a start position to an end position when the container is inverted, a feed opening (18, 118, 218, 318, 418) into the timer chamber being included providing fluid communication between the timer chamber and the container whereby fluid feeds into the timer chamber (15, 115, 215, 315, 415) characterised in that the plunger (20, 120, 220, 320, 420) has a timer flange or wall (21, 121, 221, 310, 421) which affords a wall of the timer chamber and which extends radially with regard to the annular wall (10, 106, 206, 309, 411) of the timer chamber and is in slidable sealing relationship therewith so as to sweep through a predetermined volume defined from the start position to the end position of the plunger, and the said volume constitutes the timer chamber (15, 115, 215, 315, 415) which is in fluid communication at one end with a passageway (17, 117, 217, 319, 417) of the stopper member via a restricted timer aperture (16, 116, 216, 316, 416), the said passageway being connected to the outlet opening, and in that the feed opening (18, 118, 218, 318, 418) at another end of the timer chamber feeds fluid from the container to the timer chamber (15, 115, 215, 315, 415) when the container is inverted, and in that another opening (25, 110, 325 and 406', 420) formed in the stopper wall or between the stopper wall and the timer flange or wall also feeds fluid into the passageway (17, 117, 217, 319, 417) of the stopper member and thus to the outlet opening (32, 132, 232, 332, 432) when the container is inverted, the feed opening (18, 118, 218, 318, 418) being cut off by the timer flange or wall (21, 121, 221, 310, 421) of the plunger when it moves past the feed opening a predetermined time after the container is inverted, the timer flange thereby cutting off further flow of fluid from the feed opening (18, 118, 218, 318, 418) into the timer chamber after the predetermined time from the start position, the timer chamber being emptied of fluid by the plunger, whereupon the flow of fluid from the passageway (17, 117, 217, 319, 417) to the outlet opening (32, 132, 232, 332, 432) is cut off by the plunger.

2. An assembly as claimed in Claim 1, characterised in that the annular wall (10) of the dosage-metering portion of the stopper member is located radially outwardly of the timer chamber, and an inner annular wall (11) is disposed radially inwardly of the timer chamber, the inner annular wall extending concentrically and in parallel with the first annular wall, and an aperture (16) is provided in the inner annular wall near the end portion of the plunger communicating into the outlet passageway (17) of the stopper member for fluid flow from the timer chamber into the outlet passage as the plunger (20) moves toward its end position.

3. An assembly as claimed in Claim 2, characterised in that the plunger (10) has a cup shape formed with a cylindrical skirt (24) and a bottom wall (23), the cylindrical skirt (24) being in slidable engagement with the inner annular wall (11) and having the timer flange (21) at its forward end in slidable engagement between the inner annular wall (11) and the first annular wall (10), the timer chamber (15) thereby being defined as an annular space between the two annular walls.

4. An assembly as claimed in Claim 3, characterised in that the plunger (20) has inlet openings (25) in the cylindrical skirt (24) near the bottom wall (23) for secondary flow of fluid on the inside of the inner annular wall into the outlet passage (12, 32) of the stopper member, the inlet openings (25) and the secondary fluid flow being cut off by the inner annular wall (11) as the plunger moves toward its end position.

5. An assembly as claimed in any preceding Claim, characterised by a closure cap (28, 128, 328, 428, 547) mounted on the outlet portion of the stopper member for closing the outlet passage (32, 132, 332, 432, 532).

6. An assembly as claimed in Claim 5, characterised in that the closure cap (28, 128, 328, 428, 547) has an exit opening (32, 132, 332, 432, 548) for the outflow of fluid from the outlet passage of the stopper member, and includes means for adjusting the fluid flow through the said opening.

7. An assembly as claimed in Claim 6, characterised in that the stopper member includes a rod-shaped body (13) aligned on the central axis with one end (37) extending through the outlet passage towards the exit opening (32) of the closure cap (28), the closure cap having engagement means (30) engaging the outlet portion (14) of the stopper member (3) for adjustably displacing the closure cap so that the exit opening of the closure cap is movable from a fully-opened position remote from the end of the rod-shaped body to a closed position in which the exit opening is blocked by the end of the rod-shaped body.

8. An assembly as claimed in Claim 1, characterised in that the plunger (120, 220) has a tubular shape formed with a tubular portion located radially inwardly from the annular wall (106) and has the timer flange (121, 521) at its rearward end in slidable sealing engagement with the annular wall, the timer chamber (115, 215) thereby being defined as an annular space between the annular wall and the tubular portion and the timer flange of the plunger.

9. An assembly as claimed in Claim 8, characterised by a closure cap (128) mounted on the outlet portion of the stopper member having an exit opening (132) at its forward end and a rearward flange (135) at its rearward end extending radially inwardly towards the tubular portion (120) of the plunger, the rearward flange (135) guiding the tubular portion and providing an abutment surface for the end position of the timer flange (121) of the plunger, the closure cap further having engagement means (134) engaging the outlet portion of the stopper member for adjustably displacing the closure cap along the central axis such that the rearward flange (135) defines an adjustable end position for the movement of the plunger.

10. An assembly as claimed in Claim 1, characterised in that the plunger (320) has an inverted cup shape formed with a cylindrical body and the timer flange as a forward wall (310) at its forward end, and the dosage-metering portion is formed with a cylindrical portion (309) receiving the cylindrical body (320) of the plunger in slidable sealing engagement and a terminal wall (317) defining the end position of the plunger provided with an opening (316) as the outlet passage, the timer chamber thereby being defined as a cylindrical space (315) between the timer flange (321) at the forward end of the cup-shaped plunger (320) and the cylindrical portion (309) of the dosage-metering portion.

11. An assembly as claimed in Claim 10, characterised in that the plunger (320) has a rearward flange (321) and guide fingers (322) at its rearward end which extend to side wall portions (305) of the stopper member, the guide fingers (322) allowing a secondary flow of fluid around the guide fingers and through the passageway (319) around the cylindrical portion (309) of the dosage-metering portion, the passageway (319) being closed off by the rearward flange (321) at the end position of the plunger.

12. An assembly as claimed in Claim 10, characterised by a closure cap (328) mounted on the outlet portion of the stopper member having a forward opening (332) with a plug body (335) centred therein and engagement means (318) engaging the outlet portion of the stopper member for adjustably displacing the closure cap (328) along the central axis such that the plug body (335) is movable from a fully-opened position remote from the cylindrical portion to a closure position in which the opening in the cylindrical portion is blocked by the plug body.

13. An assembly as claimed in Claim 1, characterised in that the dosage-metering portion of the stopper member includes a forward cylindrical portion (413) and a rearward cylindrical portion (411) of a lesser radius, both being concentric with the central axis, and a shoulder portion (410) connecting the cylindrical portions, the forward cylindrical portion (413) having throughflow openings (409) therein communicating into an inner bore defining the outlet passage, the plunger (420) being formed with a cylindrical wall (423) in slidable sealing relationship with the forward cylindrical portion (413) and with the timer flange (421) at its rearward end extending radially inwardly to the rearward cylindrical portion (411), the timer chamber (415) thereby being defined as an annular space between the rearward cylindrical portion (411), the shoulder portion (410), and the cylindrical wall (423) and timer flange (421) of the plunger, a feed opening (418) to the timer chamber (415) being provided between the flange (421) and the wall (411) at the start position of the plunger, the shoulder portion (410) being abutted by the timer flange (421) to define the end position of the plunger at which the cylindrical wall of the plunger cuts off the throughflow openings (409).

14. An assembly as claimed in Claim 13, characterised in that the stopper member has a first part (428) supporting the cylindrical and shoulder portions (413, 409, 410, 411), a second part (403) mounted on the neck (402) of the container, and engagement means (407) engaging the first part (428) with the second part (403) for adjustably displacing the first part along the central axis so that the shoulder portion (410) defines an adjustable end portion for the movement of the plunger.

15. An assembly as claimed in Claim 13, or Claim 14 characterised in that the plunger (420) has guide fingers (422) at its rearward end which extend to side wall portions (408) of the stopper member, the guide fingers (422) allowing a secondary flow of fluid around the guide fingers and through the throughflow openings (409) in the forward cylindrical portion of the dosage-metering portion.

## Patentansprüche

1. Dosier-Meßanordnung (3, 103, 203, 303, 403) für einen Fluidbehälter, der einen Hals (2, 102, 202, 302, 402) mit einer Öffnung aufweist, durch die Fluid abgegeben wird, wenn der Behälter umgedreht wird, mit einem Verschlußelement (4, 104, 204, 304, 404), das auf dem Hals des Behälters montiert ist und das einen Auslaßbereich mit einer Auslaßöffnung (32, 132, 232, 332, 432) für das Ausströmen von Fluid aus dem Behälter hat, wobei eine Zeitgeberkammer (15, 115, 215, 315, 415), die mit einer ringförmigen Wand (10, 1106, 206, 309, 411) und einem Kolben (20, 120, 220, 320, 420) gebildet ist, unabhängig von dem Verschluß geformt ist, wobei der Kolben in bezug auf die ringförmige Wand der Zeitgeberkammer unter dem Einfluß der Schwerkraft aus einer Startposition in eine Endposition bewegbar ist, wenn der Behälter umgedreht wird, mit einer Einlaßöffnung (18, 118, 218, 318, 418) für die Zeitgeberkammer, die eine Fluidströmung zwischen der Zeitgeberkammer und dem Behälter zuläßt, so daß Fluid in die Zeitgeberkammer (15, 115, 215, 315, 415) eintreten kann, dadurch gekennzeichnet, daß der Kolben (20, 120, 220, 320, 420) einen Zeitgeberflansch oder -wand (21, 121, 221, 310, 421) aufweist, der eine Wand der Zeitgeberkammer bildet und sich radial in bezug auf die ringförmige Wand (10, 106, 206, 309, 411) der Zeitgeberkammer erstreckt und mit dieser in verschiebbarer, abgedichteter Beziehung steht, so daß er durch ein vorgegebenes Volumen streicht, das von der Startposition bis zur Endposition des Kolbens definiert ist, und daß das Volumen die Zeitgeberkammer (15, 115, 215, 315, 415) bildet, die in Fluidströmungsverbindung an einem Ende mit einem Durchgang (17, 117, 217, 319, 417) des Verschlußteils über eine begrenzte Zeitgeberöffnung (16, 116, 216, 316, 416) steht, wobei der Durchgang an die Auslaßöffnung angeschlossen ist, daß die Einlaßöffnung (18, 118, 218, 318, 418) an einem anderen Ende der Zeitgeberkammer Fluid von dem Behälter in die Zeitgeberkammer (15, 115, 215, 315, 415) einströmen läßt, wenn der Behälter umgedreht wird, und daß eine andere Öffnung (25, 110, 325 und 406', 420), die in der Verschlußwand oder zwischen der Verschlußwand und dem Zeitgeberflansch oder -wand gebildet ist, außerdem Fluid in den Durchgang (17, 117, 217, 319, 417) des Verschlußteils einleitet und damit in die Auslaßöffnung (32, 132, 232, 332, 432), wenn der Behälter umgedreht wird, und daß die Einlaßöffnung (18, 118, 218, 318, 418) durch den Zeitgeberflansch oder -wand (21, 121, 221, 310, 421) von dem Kolben getrennt wird, wenn sich dieser über die Einlaßöffnung eine vorgegebene Zeit nach dem Umdrehen des Behälters bewegt, wobei der Zeitgeberflansch ferner die Fluidströmung von der Einlaßöffnung (18, 118, 218, 318, 418) in die Zeitgeberkammer nach der vorgegebenen Zeit von der Startposition abschneidet, wobei die Zeitgeberkammer durch den Kolben von dem Fluid geleert wird, worauf die Fluidströmung von dem Durchgang (17, 117, 217, 319, 417) zur Auslaßöffnung (32, 132, 232, 332, 432) durch den Kolben abgeschnitten wird.

2. Anordnung nach Anspruch 1, **dadurch gekennzeichnet**, daß die ringförmige Wand (10) des Dosier-Meß-Bereichs des Verschlußteils radial außerhalb der Zeitgeberkammer angeordnet ist und daß eine innere ringförmige Wand (11) radial innerhalb der Zeitgeberkammer liegt, wobei sich die innere ringförmige Wand konzentrisch und parallel zu der ersten ringförmigen Wand erstreckt, und daß eine Öffnung (16) in der inneren ringförmigen Wand in der Nähe des Endabschnitts des Kolbens vorgesehen ist, die mit dem Auslaßkanal (17) des Verschlußteils in Strömungsverbindung steht, um einen Fluidstrom von der Zeitgeberkammer in den Auslaßkanal einzurichten, wenn sich der Kolben (20) in seine Endstellung bewegt.

3. Anordnung nach Anspruch 2, **dadurch gekennzeichnet**, daß der Kolben (10) die Form eines Bechers mit angeformter zylindrischer Schürze (24) und einer Bodenwand (23) hat, wobei die zylindrische Schürze (24) in verschiebbarem Eingriff mit der inneren ringförmigen Wand (11) steht und wobei der Zeitgeberflansch (22) an seinem vorderen Ende in verschiebbarem Eingriff mit der inneren ringförmigen Wand (11) und der ersten ringförmigen Wand (10) steht und die Zeitgeberkammer (15) dadurch als Ringraum zwischen den zwei ringförmigen Wänden gebildet ist.

4. Anordnung nach Anspruch 3, **dadurch gekennzeichnet**, daß der Kolben (20) Einlaßöffnungen (25) in der zylindrischen Schürze (24) in der Nähe der Bodenwand (23) zur Sekundärströmung von Fluid an der Innenseite der inneren ringförmigen Wand zum Auslaßkanal (12, 32) des Verschlußteils hat, wobei die Einlaßöffnung (25) und die Sekundärfluidströmung von der inneren ringförmigen Wand (11) abgeschnitten wird, wenn der Kolben sich in seine Endstellung bewegt.

5. Anordnung nach einem der vorhergehenden Ansprüche, **gekennzeichnet** durch eine Verschlußkappe (28, 128, 328, 428, 547), die auf dem Auslaßabschnitt des Verschlußteils montiert ist, um den Auslaßkanal (32, 132, 332, 432, 532) zu schließen.

6. Anordnung nach Anspruch 5, **dadurch gekennzeichnet**, daß die Verschlußkappe (28, 128, 328, 428, 547) eine Auslaßöffnung (32, 132, 332, 432, 548) für das Ausfließen von Fluid aus dem Auslaßkanal des Verschlußteils hat und daß Mittel vorgesehen sind, um die Fluidströmung durch die Öffnung einzustellen.

7. Anordnung nach Anspruch 6, **dadurch gekennzeichnet**, daß das Verschlußteil einen stangenförmigen Körper (13) besitzt, der auf der Mittelachse liegt und wobei sich ein Ende (37) durch den Auslaßkanal zur Auslaßöffnung (32) der Verschlußkappe (28) erstreckt, wobei die Verschlußkappe Eingriffsmittel (30) hat, die den Auslaßbereich (14) des Verschlußteils (3) erfassen, um die Verschlußklappe einstellbar zu verschieben, so daß die Auslaßöffnung der Verschlußkappe von einer voll geöffneten Position entfernt von dem Ende des stangenförmigen Körpers zu einer geschlossenen Position bewegbar ist, in der die Auslaßöffnung durch das Ende des stangenförmigen Körpers verschlossen ist.

8. Anordnung nach Anspruch 1, **dadurch gekennzeichnet**, daß der Kolben (120, 220) eine rohrförmige Form mit einem rohrartigen Abschnitt hat, der radial innerhalb der ringförmigen Wand (106) liegt und wobei der Zeitgeberflansch (121, 521) an seinem hinteren Ende in abgedichtet verschiebbarem Eingriff mit der ringförmigen Wand steht, wobei die Zeitgeberkammer (115, 215) dadurch als ringförmiger Raum zwischen der ringförmigen Wand und dem rohrförmigen Abschnitt und dem Zeitgeberflansch des Kolbens gebildet ist.

9. Anordnung nach Anspruch 8, **gekennzeichnet** durch eine Verschlußkappe (128), die auf dem Auslaßabschnitt des Verschlußteils montiert ist und eine Auslaßöffnung (132) an ihrem vorderen Ende und einen hinteren Flansch (135) an ihrem hinteren Ende hat, der sich radial nach innen in Richtung auf den rohrförmigen Abschnitt (120) des Kolbens erstreckt, wobei der hintere Flansch (135) den rohrförmigen Abschnitt führt und eine Verschlußfläche für die Endstellung des Zeitgeberflansches (121) des Kolbens bildet, wobei die Verschlußkappe ferner Eingriffsmittel (134) aufweist, die den Auslaßabschnitt des Verschlußteils zur einstellbaren Verlagerung der Verschlußklappe entlang der Mittelachse derart erfassen, daß der hintere Flansch (135) eine einstellbare Endstellung für die Bewegung des Kolbens bildet.

10. Anordnung nach Anspruch 1, **dadurch gekennzeichnet**, daß der Kolben (320) die Form eines umgedrehten Bechers mit einem zylindrischen Körper hat und den Zeitgeberflansch als vordere Wand (310) an ihrem vorderen Ende besitzt, und daß der Dosier-Meßabschnitt mit einem zylindrischen Teil (309) gebildet ist, der den zylindrischen Körper (320) des Kolbens in verschiebbar abgedichtetem Eingriff aufnimmt, wobei eine Endwand (317) die Endstellung des Kolbens bildet und eine Öffnung (316) als Auslaßkanal aufweist, daß die Zeitgeberkammer dadurch als ein zylindrischer Raum (315) zwischen dem Zeitgeberflansch (321) am vorderen Ende des schalenförmigen Kolbens (320) und dem zylindrischen Abschnitt (309) des Dosier-Meßabschnitts gebildet ist.

11. Anordnung nach Anspruch 10, **dadurch gekennzeichnet**, daß der Kolben (320) einen hinteren Flansch (321) und Führungsfinger (322) an seinem hinteren Ende hat, die sich zu den Seitenwandabschnitten (305) des Verschlußteils erstrecken, wobei die Führungsfinger (322) eine Sekundärströmung von Fluid um die Führungsfinger und durch den Kanal (319) um den zylindrischen Abschnitt (309) des Dosier-Meßabschnitts zulassen, wobei der Kanal (319) durch den hinteren Flansch (321) in der Endstellung des Kolbens verschlossen wird.

12. Anordnung nach Anspruch 10, **gekennzeichnet** durch eine Verschlußkappe (328), die auf dem Auslaßabschnitt des Verschlußteils sitzt und eine vordere Öffnung (332) aufweist, in die ein Stopfenkörper (335) zentriert eingesetzt ist, daß Eingriffsmittel (318) in den Auslaßabschnitt des Verschlußteils eingreifen, um die Verschlußkappe (328) entlang der Mittelachse derart einstellbar zu verschieben, daß der Stopfenkörper (335) von einer voll geöffneten Stellung, die entfernt zu dem zylindrischen Abschnitt liegt, in eine Verschlußstellung bewegbar ist, in der die Öffnung im zylindrischen Abschnitt durch den Stopfenkörper blockiert wird.

13. Anordnung nach Anspruch 1, **dadurch gekennzeichnet**, daß der Dosier-Meßabschnitt des Verschlußteils einen vorderen zylindrischen Abschnitt (413) und einen hinteren zylindrischen Abschnitt (411) von geringerem Radius einschließt, die beide konzentrisch zu der Mittelachse sind, und daß ein Schulterabschnitt (410) die zylindrischen Abschnitte verbindet, wobei der vordere zylindrische Abschnitt (413) Durchströmöffnungen (409) besitzt, die in eine Innenbohrung übergehen, die den Auslaßkanal bildet, wobei der Kolben (420) von einer zylindrischen Wand (423) gebildet ist und in gleitend abgedichteter Beziehung zu dem vorderen zylindrischen Abschnitt (413) steht und wobei sich der Zeitgeberflansch (421) an seinem hinteren Ende radial nach innen zu dem hinteren zylindrischen Abschnitt (411) erstreckt, so daß die Zeitgeberkammer (415) dadurch als ein ringförmiger Raum zwischen dem hinteren zylindrischen Abschnitt (411), dem Schulterabschnitt (410) und der zylindrischen Wand (423) und dem Zeitgeberflansch (421) des Kolbens gebildet ist, wobei eine Einlaßöffnung (418) zu der Zeitgeberkammer (415) zwischen dem Flansch (421) und der Wand (411) in der Startposition des Kolbens gebildet ist und der Schulterabschnitt (410) von dem Zeitgeberflansch (421) berührt wird, um die Endstellung des Kolbens zu definieren, in der die zylindrische Wand des Kolbens die Durchströmöffnungen (409) absperrt.

14. Anordnung nach Anspruch 13, **dadurch gekennzeichnet**, daß das Verschlußteil einen ersten Teil (428) hat, der die zylindrischen und die Schulterabschnitte (413, 409, 410, 411) trägt, daß ein zweiter Teil (403) auf dem Hals (402) des Behälters sitzt, und daß Eingriffsmittel (407) den ersten Teil (428) mit dem zweiten Teil (403) erfassen, um den ersten Teil entlang der Mittellinie einstellbar zu verlagern, so daß der Schulterabschnitt (410) einen einstellbaren Endabschnitt für die Bewegung des Kolbens bildet.

15. Anordnung nach Anspruch 13 oder 14, **dadurch gekennzeichnet**, daß der Kolben (420) Führungsfinger (422) an seinem hinteren Ende aufweist, die sich zu den Seitenwandabschnitten (408) des Verschlußteils erstrecken, wobei die Führungsfinger (422) eine Sekundärströmung von Fluid um die Führungsfinger und durch die Durchströmöffnungen (409) in dem vorderen zylindrischen Abschnitt des Dosier-Meßabschnitts zulassen.

## Revendications

1. Ensemble de mesure-dosage (3, 103, 203, 303, 403) pour un réservoir de fluide, qui possède un bec (2, 102, 202, 302, 402) muni d'une ouverture par laquelle le fluide est délivré lorsque le réservoir est renversé, l'ensemble comprenant un organe d'arrêt (4, 104, 204, 304, 404) qui est monté sur le bec du réservoir et qui possède une partie d'évacuation munie d'une ouverture d'évacuation (32, 132, 232, 332, 432) pour permettre l'écoulement du fluide vers l'extérieur depuis le réservoir, une chambre de débit (15, 115, 215, 315, 415) définie par une paroi annulaire (10, 106, 206, 309, 411) et un piston (20, 120, 220, 320, 420) formé séparément de l'organe d'arrêt, le piston étant mobile par rapport à la paroi annulaire de la chambre de débit sous l'action de la gravité depuis une position initiale jusqu'à une position finale lorsque le réservoir est renversé, une ouverture d'alimentation (18, 118, 218, 318, 418) de la chambre de débit étant prévue pour établir une communication de fluide entre la chambre de débit et le réservoir, le fluide étant ainsi alimenté dans la chambre de débit (15, 115, 215, 315, 415), caractérisé en ce que le piston (20, 120, 220, 320, 420) possède une collerette ou paroi de débit (21, 121, 221, 310, 421) qui joue le rôle d'une paroi de la chambre de débit et qui s'étend radialement par rapport à la paroi annulaire (10, 106, 206, 309, 411) de la chambre de débit et est placée en relation d'étanchéité et à coulissement par rapport à celle-ci, de manière à balayer un volume prédéterminé défini entre la position initiale et la position finale du piston, et ledit volume constitue la chambre de débit (15, 115, 215, 315, 415) qui est en communication de fluide à une extrémité avec un passage (17, 117, 217, 319, 417) de l'organe d'arrêt par l'intermédiaire d'une ouverture de débit restreinte (16, 116, 216, 316, 416), ledit passage étant relié à l'ouverture d'évacuation, et en ce que l'ouverture d'alimentation (18, 118, 218, 318, 418) située à une autre extrémité de la chambre de débit alimente en fluide la chambre de débit (15, 115, 215, 315, 415) à partir du réservoir lorsque le réservoir est renversé, et en ce qu'une autre ouverture (25, 110, 325 et 406', 420) formée dans la paroi de l'organe d'arrêt ou entre la paroi de l'organe d'arrêt et la collerette ou paroi de débit alimente également en fluide le passage (17, 117, 217, 319, 417) de l'organe d'arrêt et ainsi l'ouverture d'évacuation (32, 132, 232, 332, 432) lorsque le réservoir est renversé, l'ouverture d'alimentation (18, 118, 218, 318, 418) étant fermée par la collerette ou paroi de débit (21, 121, 221, 310, 421) du piston lorsqu'il passe devant l'ouverture d'alimentation en un instant prédéterminé après que le réservoir ait été renversé, la collerette de débit arrêtant ainsi tout écoulement supplémentaire de fluide provenant de l'ouverture d'alimentation (18, 118, 218, 318, 418) vers la chambre de débit après un instant prédéterminé à partir de la position initiale, la chambre de débit étant vidée de son fluide par le piston, après quoi l'écoulement de fluide en provenance du passage (17, 117, 217, 319, 417) vers l'ouverture d'évacuation (32, 132, 232, 332, 432) est arrêté par le piston.

2. Ensemble selon la revendication 1, caractérisé en ce que la paroi annulaire (10) de la partie de mesure-dosage de l'organe d'arrêt est située radialement à l'extérieur de la chambre de débit, et une paroi annulaire interne (11) est placée radialement à l'intérieur de la chambre de débit, la paroi annulaire interne s'étendant concentriquement et parallèlement avec la première paroi annulaire, et une ouverture (16) est ménagée dans la paroi annulaire interne au voisinage de la partie d'extrémité du piston en communication avec le passage de sortie (17) de l'organe d'arrêt pour permettre l'écoulement de fluide depuis la chambre de débit vers le passage de sortie lorsque le piston (20) se déplace en direction de sa position finale.

3. Ensemble selon la revendication 2, caractérisé en ce que le piston (10) possède une forme en cloche définie par une jupe cylindrique (24) et une paroi de fond (23), la jupe cylindrique (24) coopérant à coulissement avec la paroi annulaire interne (11) et possédant la collerette de débit (21) au niveau de son extrémité avant placée en coopération à coulissement entre la paroi annulaire interne (11) et la première paroi annulaire (10), la chambre de débit (15) étant ainsi définie sous la forme d'un espace annulaire entre les deux parois annulaires.

4. Ensemble selon la revendication 3, caractérisé en ce que le piston (20) possède des ouvertures d'admission (25) placées dans la jupe cylindrique (24) au voisinage de la paroi de fond (23) pour permettre un écoulement secondaire de fluide à l'intérieur de la paroi annulaire interne en direction du passage d'évacuation (12, 32) de l'organe d'arrêt, les ouvertures d'admission (25) et l'écoulement secondaire de fluide étant fermés par la paroi annulaire interne (11) lorsque le piston se déplace en direction de sa position finale.

5. Ensemble selon l'une quelconque des revendications précédentes, caractérisé par un couvercle de fermeture (28, 128, 328, 428, 547) monté sur la partie d'évacuation de l'organe d'arrêt de manière à fermer le passage de sortie (32, 132, 332, 432, 532).

6. Ensemble selon la revendication 5, caractérisé en ce qu'un couvercle de fermeture (28, 128, 328, 428, 547) possède une ouverture de sortie (32, 132, 332, 432, 548) pour permettre l'écoulement vers l'extérieur de fluide à partir du passage de sortie de l'organe d'arrêt, et comprend des moyens destinés à régler l'écoulement de fluide au travers de ladite ouverture.

7. Ensemble selon la revendication 6, caractérisé en ce que l'organe d'arrêt comporte un corps en forme de tige (13) aligné avec l'axe central et possède une extrémité (37) traversant le passage de sortie en direction de l'ouverture d'évacuation (32) du couvercle de fermeture (28), le couvercle de fermeture possédant des moyens de coopération (30) coopérant avec la partie d'évacuation (14) de l'organe d'arrêt (3) et servant à déplacer de manière réglable le couvercle de fermeture afin que l'ouverture de sortie du couvercle de fermeture soit mobile entre une position totalement ouverte éloignée de l'extrémité du corps en forme de tige et une position fermée dans laquelle l'ouverture d'évacuation est bloquée par l'extrémité du corps en forme de tige.

8. Ensemble selon la revendication 1, caractérisé en ce que le piston (120, 220) possède une forme tubulaire définie par une partie tubulaire logée intérieurement radialement à la paroi annulaire (106) et possède la collerette de débit (121, 521) au niveau de son extrémité arrière placée en coopération d'étanchéité et à coulissement avec la paroi annulaire, la chambre de débit (115, 215) étant ainsi définie sous la forme d'un espace annulaire entre la paroi annulaire et la partie tubulaire et la collerette de débit du piston.

9. Ensemble selon la revendication 8, caractérisé par un couvercle de fermeture (128) monté sur l'extrémité d'évacuation de l'organe d'arrêt et possédant une ouverture de sortie (132) au niveau de son extrémité avant et une collerette arrière (135) au niveau de son extrémité arrière s'étendant radialement intérieurement en direction de la partie tubulaire (120) du piston, la collerette arrière (135) servant à guider la partie tubulaire et à fournir une surface de butée pour la position finale de la collerette de débit (121) du piston, le couvercle de fermeture possédant en outre des moyens de coopération (134) coopérant avec la partie d'évacuation de l'organe d'arrêt afin de déplacer de manière réglable le couvercle de fermeture le long de l'axe central de sorte que la collerette arrière (135) définit une position finale réglable pour déplacement du piston.

10. Ensemble selon la revendication 1, caractérisé en ce que le piston (320) est de forme en cloche renversée et possède un corps cylindrique et une collerette de débit servant de paroi avant (310) située au niveau de son extrémité avant, et la partie de mesure-dosage est formée avec une partie cylindrique (309) logeant le corps cylindrique (320) du piston par coopération d'étanchéité et à coulissement et une paroi terminale (317) délimitant la position finale du piston et munie d'une ouverture (316) servant de passage de sortie, la chambre de débit étant ainsi définie sous la forme d'un espace cylindrique (315) entre la collerette de débit (321) au niveau de l'extrémité avant du piston en forme de cloche (320) et la partie cylindrique (309) de la partie de mesure-dosage.

11. Ensemble selon la revendication 10, caractérisé en ce que le piston (320) possède une collerette arrière (321) et des doigts de guidage (322) placés à son extrémité arrière et qui s'étendent en direction de parties de parois latérales (305) de l'organe d'arrêt, les doigts de guidage (322) permettant un écoulement secondaire de fluide autour des doigts de guidage et par le passage (319) autour de la partie cylindrique (309) de la partie de mesure-dosage, le passage (319) étant fermé par la collerette arrière (321) lorsque le piston est en position finale.

12. Ensemble selon la revendication 10, caractérisé par un couvercle de fermeture (328) monté sur la partie d'évacuation de l'organe d'arrêt et possédant une ouverture avant (332) munie d'un corps d'obturation (335) centré à l'intérieur de celle-ci et des moyens de coopération (318) coopérant avec la partie d'évacuation de l'organe d'arrêt afin de déplacer de manière réglable le couvercle de fermeture (328) le long de l'axe central de sorte que le corps d'obturation (335) est mobile entre une position totalement ouverte éloignée de la partie cylindrique et une position fermée dans laquelle l'ouverture ménagée dans la partie cylindrique est bloquée par le corps d'obturation.

13. Ensemble selon la revendication 1, caractérisé en ce que la partie de mesure-dosage de l'organe d'arrêt comporte une partie cylindrique avant (413) et une partie cylindrique arrière (411) d'un rayon inférieur, toutes deux étant concentriques avec l'axe central, et une partie formant épaulement (410) reliant les parties cylindriques, la partie cylindrique avant (413) possédant des ouvertures traversantes (409) en communication avec un alésage interne définissant le passage de sortie, le piston (420) étant formé d'une paroi cylindrique (423) placée en relation d'étanchéité et à coulissement avec la partie cylindrique avant (413) et est formée d'une collerette de débit (421) à son extrémité arrière s'étendant radialement vers l'intérieur de la partie cylindrique arrière (411), la chambre de débit (415) étant ainsi définie sous la forme d'un espace annulaire entre la partie cylindrique arrière (411), la partie formant épaulement (410) et la paroi cylindrique (423) et la collerette de débit (421) du piston, une ouverture d'alimentation (418) de la chambre de débit (415) étant ménagée entre la collerette (421) et la paroi (411) lorsque le piston est en position initiale, la partie formant épaulement (410) servant de butée pour la collerette de débit (421) afin de définir la position finale du piston dans laquelle la paroi cylindrique du piston ferme les ouvertures traversantes (409).

14. Ensemble selon la revendication 13, caractérisé en ce que l'organe d'arrêt possède une première partie (428) supportant les parties cylindriques et les parties formant épaulement (413, 409, 410, 411), une deuxième partie (403) montée sur le bec (402) du réservoir, et des moyens de coopération (407) servant à faire coopérer la première partie (428) avec la deuxième partie (403) afin de déplacer de manière réglable la première partie le long de l'axe central de sorte que la partie formant épaulement (410) définit une partie d'extrémité réglable pour le déplacement du piston.

15. Ensemble selon la revendication 13 ou 14, caractérisé en ce que le piston (420) possède des doigts de guidage (422) à son extrémité arrière qui s'étendent en direction de parties de parois latérales (408) de l'organe d'arrêt, les doigts de guidage (422) permettant un écoulement secondaire de fluide autour des doigts de guidage et dans la partie cylindrique avant de la partie de mesure-dosage par l'intermédiaire des ouvertures traversantes (409).
